# EUROPEAN PATENT APPLICATION

(11) **EP 4 439 370 A1**
(43) Date of publication of application: **02.10.2024**
(21) Application number: 23220276.2
(22) Date of filing: 27.12.2023
(51) Int. Cl.: G06F 30/17, G06F 30/20, G05B 19/4068, G06F 111/10, G06F 113/20

(54) **METHOD FOR SIMULATING THE MOTION OF AT LEAST PART OF AN AUTOMATIC MACHINE FOR MANUFACTURING OR PACKAGING CONSUMER ARTICLES**

(30) Priority: 29.03.2023 IT 202300006141
(71) Applicant: G.D S.p.A., 40133 Bologna (IT)
(72) Inventor: DEGLI ESPOSTI, Matteo, 40133 Bologna (IT); CARBONI, Luca, 40133 Bologna (IT)
(74) Representative: Studio Torta S.p.A.

(57) **Abstract**

A method for simulating the motion of at least part (5) of an automatic machine (1) for manufacturing or packaging consumer articles (3) comprising the steps of defining a three-dimensional model (13), in a computer-aided design environment (14), of the part (5) whose motion is to be simulated; programming a software (SW) for controlling the motion of one or more movable operating elements (2) of the part (5) of the automatic machine (1); extracting a data set (DS) about the commanded position (P) established, at a given time instant (t1, t2, ..., tn), for said one or more movable operating elements (2); communicating the data set (DS) about the commanded position (P) in the aided design environment (14); and simulating the movement of said one or more movable operating elements (2) by changing the position of said one or more movable operating elements (2) according to the data set (DS) about the commanded position (P).

## Description

### CROSS-REFERENCE TO RELATED APPLICATIONS

This patent application claims priority from Italian patent application no. 102023000006141 filed on March 29, 2023, the entire disclosure of which is incorporated herein by reference.

### TECHNICAL FIELD

The invention relates to a method for simulating the motion of at least part of an automatic machine for manufacturing or packaging consumer articles.

The invention can advantageously be applied, though not in a limiting manner, to the simulation of the motion of an automatic machine for manufacturing packs, to which explicit reference will be made in the description below without because of this losing generality.

### PRIOR ART

An automatic manufacturing machine usually comprises a plurality of actuators, which act upon consumer articles (for example packs for cigarettes, food items, hygiene absorbent articles, etc.) to change their shape, structure or position. Generally speaking, said actuators are electric motors or pneumatic cylinders and are connected in an integral manner to mechanical parts with different shapes and dimensions, which are designed to process the consumer articles.

Because of the continuous increase in production volumes, said automatic machines are becoming more and more complex, both in terms of mechanical parts, which have to be more small-sized and perform more complicated operations, and in terms of increase in the active components of the automatic machine, such as motors and/or sensors. This increasing complexity makes it harder for manufacturers to identify and solve designing problems or errors through simulations, which are usually carried out with motion controllers, which provide, as a simulation output, graphs that are not always easily readable. In other words, the debug of the motion of the actuators of an automatic machine is currently carried out by means of (scarcely intuitive) oscilloscope graphs, which show the logics thereof.

However, these graphs make it difficult for users to understand in detail what the motions of the last followers are going to be, said last followers being connected to the motors, often by means of reduction units or crank mechanisms. As a consequence, it can also be complicated to exactly understand the working modes of the last followers in shared spaced, where collision can occur.

This problem clearly gets worse in case of several machines connected in line.

In the last few years, in order to check for the presence of collisions, virtual visual models were developed, directly in the simulation environments of the motion controllers (for example, TwinCAT^{®}), of the simplified graphics to check for possible collisions.

However, the generation of these graphics requires additional time adding up to the designing time, thus significantly increasing the delivery times of the machine.

At the same time, by means of three-dimensional modelling programs, also known as CAD (computer-aided design), the several components of an automatic machine can be linked to one another so that, when one of them moves, the others move as well. This allows designers to test the correct moving of parts that are linked to one another, but not of parts that are operated by different motors (designers manually move a part, for example by means of a mouse).

In the last few years, simulation through three-dimensional modelling programs further evolved, allowing designers to record videos, from fixed point of views, in which the positions of one or more components are updated in a predefined manner, thus simulating the movement of the part. However, this solution is used to test theoretical movements and not actual movements, namely movements that are present in the program of the motion controller that will actually control the electric motors of the automatic machine.

Therefore, in any case, it is not possible, without too much effort, to obtain a simulation that permits, at the same time, a visual debug of the laws of motion and of how they were programmed on a logic level in the motion controller, in the PLC or in the industrial PC.

Hence, the industry needs to improve the usability of visual simulations that allow manufacturers to check for the correct execution/writing of the code and of the designed laws of motion, without necessarily taking days for the simplification of 3D models or for the implementation of internal models of the motion controller.

### DESCRIPTION OF THE INVENTION

The object of the invention is to provide a method for simulating the motion of at least part of an automatic machine for manufacturing or packaging consumer articles, which is at least partially free from the drawbacks described above and, at the same time, is simple and economic to be carried out.

According to the invention, there is provided a method for simulating the motion of at least part of an automatic machine for manufacturing or packaging consumer articles according to the appended claims. There is also provided an apparatus for simulating the motion of at least part of an automatic machine for manufacturing or packaging consumer articles to carry out the aforesaid method. The appended claims describe preferred embodiments of the invention and form an integral part of the description.

### BRIEF DESCRIPTION OF THE DRAWINGS

The invention will now be described with reference to the accompanying drawings, which show some non-limiting embodiments thereof, wherein:
- figure 1 is a schematic perspective view of an automatic manufacturing machine for the production of packs;
- figure 2 is a schematic perspective view of a virtual three-dimensional model of part of the automatic manufacturing machine of figure 1;
- figure 3 shows a schematic structure, with details removed for greater clarity, of an apparatus according to the invention.

### PREFERRED EMBODIMENTS OF THE INVENTION

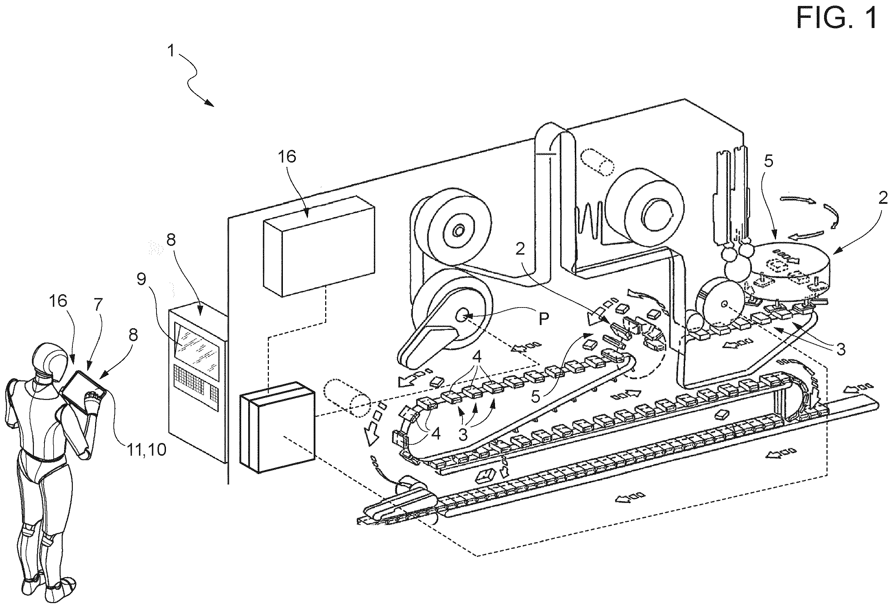

Figure 1 schematically shows an automatic machine 1 for the production of consumer articles, in particular an automatic manufacturing machine 1 for the production of cigarette packs.

In the figures, the same numbers and the same reference letters indicate the same elements or components with the same function.

For the purposes of the invention, the term "second" component does not imply the presence of a "first" component. As a matter of fact, these terms are only used as labels to improve clarity and should not be interpreted in a limiting manner.

The elements and features contained in the different preferred embodiments, drawings included, can be combined with one another, without for this reason going beyond the scope of protection of this patent application, as described hereinafter.

The automatic machine 1 comprises a plurality of movable operating elements 2 designed process the consumer articles 3 (cigarette packs 4, in the embodiment shown in figure 1). In particular, the automatic machine 1 comprises a part 5 (for example, a wrapping or pack forming unit) provided with a set of actuators 6, each mechanically connected to at least one respective movable operating element 2 to carry out one or more processing operations on one or more articles 3.

According to some preferred, though non-limiting embodiments like the ones shown on the accompanying figures, the actuators 6 comprise electric motors (in particular, of the *brushless* kind). According to another non-limiting embodiments, the actuators 6 also comprise operating elements other than the electric motors (for instance, pneumatic or hydraulic cylinders, electrically operated cylinders, etc.).

According to a first aspect of the invention, there is provided an apparatus 7 for simulating the motion of the part 5 of the automatic machine 1 for manufacturing or packaging consumer articles 3. In particular, the apparatus 7 can be comprised in the circuits of the automatic machine 1 (for example, in an interface device 8, such as a control panel 9 comprising an industrial PC) or it can be located in a mobile system 10, such as a tablet 11 or a designer's PC.

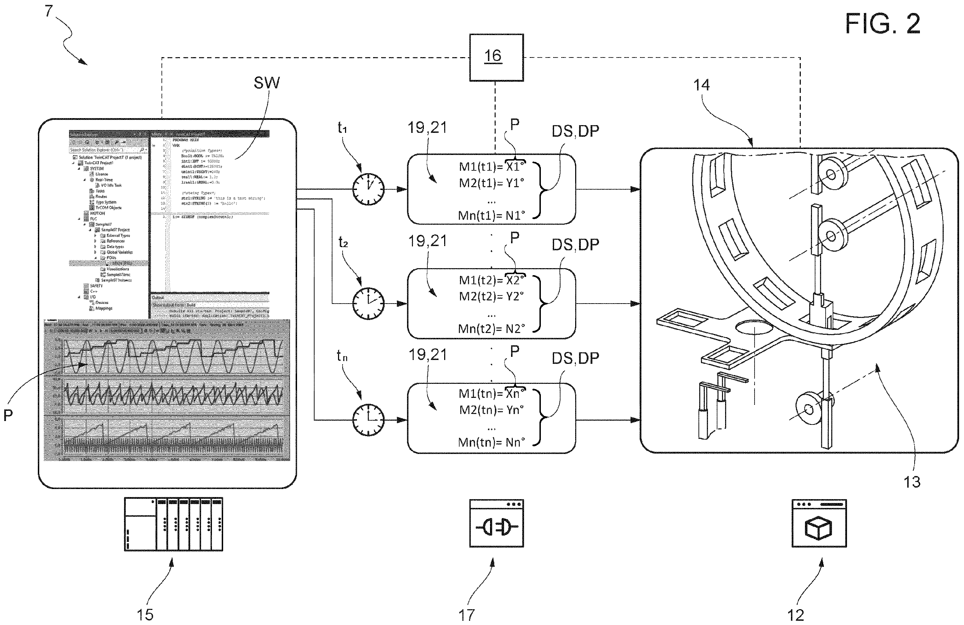

As shown in the non-limiting embodiment of figure 2, the apparatus 7 comprises a first processor 12 configured to define a (virtual) three-dimensional model 13, in a computer-aided design environment 14 (also known as CAD programs, of the known kind and not described in detail, such as for example Inventor^{®}, Creo^{®}, Solid Edge^{®}, etc.), of the part 5 of automatic machine 1 whose motion has to be simulated.

For instance, the first processor 12 can be the processor or one of the processors of the mobile system 10 or of the interface device 8 (in particular, one of the processors of the pc of a designer of the part 5).

Furthermore, the apparatus 7 advantageously comprises a second processor 15, which is configured to run a software SW for controlling the motion of said one or more movable operating elements 2 of the part 3 of the automatic machine 1. In particular, the control software SW is configured to control, in use, the actual motion of the part 3 of machine 1. In other words, the motion control software SW actually is the program that controls the electric motors or, anyway, the actuators 6 that move the movable operating elements 2 of the part 3, once the latter has been manufactured.

The software SW can be run by the second processor 15 both to directly control the actuators 6 and to simulate what will be the behaviour of the actuators 6, hence of the elements 2, before the machine 1 is even assembled. In other words, the software SW substantially is the software that will control the motion of the part 5 of the automatic machine 1 (or of the entire automatic machine 1) and that, during the designing phase, is usually used to obtain the oscilloscope graphs mentioned in the introduction of this description.

For instance, the second processor 15 can be the processor or one of the processors of the mobile system 10 or of the interface device 8 (in particular, one of the processors of the pc of a designer of the part 5).

In addition, the apparatus 7 comprises a control unit 16, which is configured to connect the first processor 12 to the second processor 15 by means of an interface 17, preferably a software interface (for example, an API), and to exchange a data set DS (about a commanded position P established, at a given time instant t1, t2, ..., tn, for said one or more movable operating elements 2 or elements connected to them) from the motion control software SW to the aided design environment 14.

In some non-limiting cases, the control unit 16 preferably monitors and controls the first processor 12, the second processor 15 and the interface 17.

Preferably, though not in a limiting manner, the first processor 12, the second processor 15 and the control unit 16 are comprised in (or can even coincide with) a same computer, such as for the example the tablet 11 or the pc of a designer.

In particular, the control unit 16 is configured to simulate the motion of said one or more movable operating elements 2 in the aided design environment 14 by changing the position (in the virtual three-dimensional space) of said one or more movable operating elements 2 according to the data set DS on the commanded position P.

According to a further aspect of the invention, there is provided a computer-implemented method for simulating the motion of at least part 5 of the automatic machine 1 for manufacturing or packaging consumer articles 3.

The method comprises, first of all, a step of defining the three-dimensional model 13 in the computer-aided design environment 14. This definition can be carried out through the import of one or more components that are connected and/or linked to one another, through a direct design of the components inside the environment 14 or through a combination of these activities. This leads, in particular, to the creation of the three-dimensional model 13 of the automatic machine part 5, whose motion has to be simulated and which comprises the respective one or more movable operating elements 2.

In addition, the method comprises the step of programming or exporting the software SW for controlling the motion of said one or more movable operating elements 2 of the part 5 of the automatic machine 1. In particular, as mentioned above, the control software SW is designed to control, in use, the actual motion of the part 5 of machine 1.

The method advantageously entails cyclically repeating (as shown in the non-limiting embodiment of figure 2), in successive time instants t1, t2, ..., tn, the steps of:
- extracting, during the execution of the motion control software SW, a data set DS about the commanded position P, at a given time instant t1, t2, ..., tn, of said one or more movable operating elements 2 or elements 18 connected to them;
- communicating the data set DS about the commanded position P in the aided design environment 14; and
- simulating the movement of said one or more movable operating elements 2 in the aided design environment by changing the position of said one or more movable operating elements 2 according to the data set DS about the commanded position P.

In particular, during the extracting step, the second processor 15 displays a software interfacing table 19 containing the data DS on the position P established by the software SW in a specific time instant t1, t2, ..., tn.

Subsequently, the interface 17 preferably retrieves the software interfacing table 19 (if necessary, processes/translates it according to a predefined protocol) and transmits it to the first processor 12, which (controlled by the control unit 16) changes the position of the elements 2 based on the data DS contained in the table 19, consequently simulating, instant by instant, the successive positions of the movable operating elements 2 in the three-dimensional model 13 of the environment 14. In this way, it is possible to move inside the environment 14 while the movable operating elements 2 and/or other virtual objects connected to them according to known methods move according to the software interfacing table 19.

Preferably, though not in a limiting manner, the communication between the aided design environment 14 and the running motion control software SW takes place in real time (through the interface 17).

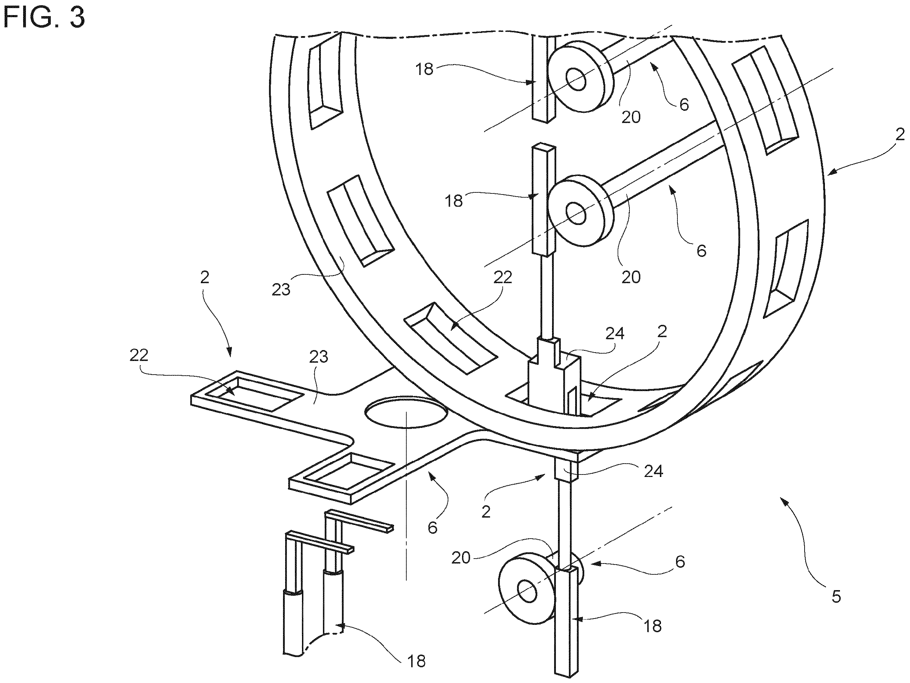

Advantageously, though not in a limiting manner and as shown in the non-limiting embodiment of figure 3, in the aided design environment 14, each movable operating element 2 of the three-dimensional model 13 is connected, in a constrained manner, to at least one shaft 20 configured to be operated by the motion control software SW (for example, through the interposition of an electric actuator). In other words, in the case of figure 3, the elements 18 connected to the movable operating elements 2 are the respective shafts 20.

Preferably, according to some preferred embodiments, the data set DS, namely the software interfacing table 19, comprises the commanded position P, preferably the absolute one, preferably in degrees, of the respective shaft 20 for each movable operating element 2.

Advantageously, though not in a limiting manner, the shaft 20 or, anyway, each respective shaft 20 is a follower/output element of an actuator 6, hence, for example, the output shaft of a reduction unit connected to the rotor of an electric motor.

According to some non-limiting embodiments, in order to lighten the display of the simulation in the aided design environment 14, the steps of extracting, communicating and simulating are cyclically performed at consecutive time instants spaced apart from one another by 10 or more milliseconds apart, in particular 20 or more milliseconds. In other words, the sampling/refresh time of the data set DS in the software interfacing table 19 is at least 10 ms, in particular 20 ms or more.

Advantageously, though not in a limiting manner, in this case, in order to allow for a smooth display of the simulation, the method further comprises the step of interpolating (by means of known techniques, which, therefore, are not described in detail), preferably through the aided design environment 14, successive positions P of a same movable operating element 2.

In some preferred non limiting cases, the method further comprises the step of verifying, visually or instrumentally by means of the aided design environment (for example, with known tools, which are not described in detail, for calculating distances and/or interferences), in particular interrupting the step of simulating by pausing the running of the motion control software SW, the distances between movable operating elements 2 and/or from fixed parts of the automatic machine 1; and/or the phasing of the movements of the movable operating elements 2 in the case of a shared workspace; and/or the zeros of the movable operating elements 2 from which to start in the calculation of the position (in particular, when it is absolute). As a matter of fact, by having the shaft 20 of the virtual three-dimensional model 13 assume given absolute positions, it is possible to visually check what discussed above thanks to the mechanical constraints that can be set through the environment 13 between the elements 2 and the shafts 20 (which, in reality, will be subsequently controlled by the software SW). In this way, possible errors in the design of the electronic cams, in the software or even in the mere decision of the zeros, can be highlighted and detected.

According to some non-limiting embodiments, the automatic machine 1 comprises a control unit designed to control the state, the position and the dynamics of the movable operating elements 2 (hence, also of the actuators) and a recording system (not shown), in particular a real time one, configured to record a track (namely, to record a set of operating variable characterising the operation of the automatic machine 1). For example, the recording system can be a computer, a processor, a printed circuit board, etc. In particular, the automatic machine 1 comprises a writeable memory (in particular, a non-volatile one) connected to the recording system so that the recording system can write the values of the operating variables to be recorded (namely, a track) on it. Advantageously, though not in a limiting manner, the data set DS is extracted during the execution of the motion control program on a real machine 1, so as to remotely analyse its behaviour by means of the simulating step.

In some non-limiting cases, the recorded track containing the values of the recorded operating variables is used to generate the software interfacing table 19 (also known as "intermediate table") containing the positions P of the movable operating elements (or, better said, of the shafts 20).

In other non-limiting cases, the machine 1 and the apparatus 7 are directly connected (via internet, assuming that there are no band limits) so that the real machine 1 directly generates the data for the software interfacing table 19. In this way, an operator standing far from the automatic machine 1 can exactly see what is happening or what happened in the automatic machine 1 even from a significant distance, thus reducing service and travelling costs for automatic machine manufacturers.

Preferably, though not in a limiting manner, in addition to what disclosed so far, the method comprises further steps of extracting, during the execution of the motion control software SW, a data set DP on the presence or absence of one or more consumer articles 3 in respective given positions at time instants t1, t2, ..., tn. In other words, the method entails generating, with the same principles as the ones used for the software interfacing table 19 disclosed above, a further software interfacing table 21 (or an enrichment of the table 19) containing logic presence information (present/absent) relating to an article in a given position of the part 5 of the machine 1. For example, in a line of the table 21, there is a positive data item on the presence, in the instant t1, of a pack 4 in a seat 22 of a drum 23 (as shown in figure 3).

As a consequence, not in a limiting manner, the method further comprises the step of communicating the data set DP on the presence or absence to the aided design environment 14; and of visually simulating the presence or absence of said one or more articles 3 in the respective given position (for instance, the seat 22) based on the data set DP on the presence or absence.

Hence, generally speaking, the information on the presence or absence of the article is anyway generated in a fictitious manner by a part of the motion control software SW (which will be disabled after the simulation, since it is useless for the actual handling of the automatic machine 1).

In use, each designer works in his/her respective development environment (a software designer works in a software development environment and a mechanical designer works in the environment 14 by means of a known CAD program). The software SW moves the actuators 6 independently of the environment 14, which receives, in real time, the positions to be set for the virtual actuators 6 (through the interface 17 and the software interfacing table 19). If the the updating time of the table 19 is significant, in order to lighten the load of the simulation environment 14, the positions at successive time instants t1, t2, ..., tn are interpolated with one another, thus allowing the designer to exactly see how the software SW will move the real automatic machine 1 once it is assembled and wired.

The non-limiting embodiment of figure 2 shows, by way of example, three successive time instants t1, t2, ..., tn, in which the first processor 15 provides the interface with three respective software interfacing tables 19, which respectively contain the positions X, Y, ..., N of the axes M1, M2, ..., Mn at the successive time instants 1, 2, ..., n. These positions are sent, for each axis (namely, actuator 6), preferably, though not necessarily in degrees, to the first processor 12, which sets them as successive positions of the actuators 6 of the virtual model 13.

The non-limiting embodiment of figure 3 shows a part 5 of the automatic machine 1 where several movable operating elements 2 (in particular, two pushing elements 24 and two drums 23) share a work zone in the area of the seats 22. In particular, the positions of the follower shafts 20 are set, the latter being connected, in the environment 14, to the movable operating elements 2 in a direct manner, like in the case of the drum 23, or through kinematic mechanisms, like in the case of pinion and rack, which connect the shafts 20 to the pushing elements.

The apparatus 7 is configured (and, hence, programmed) to perform the method described above.

Even though the invention described above especially relates to a precise embodiment, it should not be considered as limited to this single embodiment, as its scope of protection comprises all those variants, changes or simplifications that would be evident for a person skilled in the art, such as for example: addition of further steps, addition of different kinds of generation of the software interfacing table or of different kinds of calculations to obtain the position of the actuators or of different kinds of simulation, use of models or algorithms other than the ones discussed above, etc..

The invention offers many advantages.

First of all, it allows the software design environment to communicate with the mechanical design environment (CAD), in particular allowing designers to check for the correctness of the software SW, especially in relation to the phasing, the calculation of the electronic cams or of the interferences. Furthermore, the correctness of the machine zeros can be tested before the machine is even assembled and the control of the electric actuators can be validated before assembling the automatic machine.

In addition, the invention prevents technicians from having to travel to solve problems affecting the actuators, since it improves the efficiency of the resolution of possible malfunctions, in particular sporadic ones.

In particular, thanks to the method disclosed above, unexpected and undesired events can be checked in real time or after they have actually occurred, but anyway in a remote manner.

In addition, the invention solves sporadic problems without necessarily having to stop production, since the recording or the transmission of the operating variables takes place on-line, while the machine is operating.

Finally, the invention stiffens the structure of the software and allows manufacturers to identify unexpected operating conditions, possibly due to wrong or failed communications between different departments on unexpected developments during the design of the automatic machine, which would otherwise be extremely complicated to detect and solve, since they would be discovered only during the test of the assembled automatic machine, thus slowing down its delivery.

### KEY

- 1: automatic machine
- 2: operating elements
- 3: consumer articles
- 4: packs
- 5: part
- 6: actuators
- 7: apparatus
- 8: interface device
- 9: control panel
- 10: mobile system
- 11: tablet
- 12: first processor
- 13: three-dimensional model
- 14: design environment
- 15: second processor
- 16: control unit
- 17: interface
- 18: connected elements
- 19: software interfacing table
- 20: shaft
- 21: software interfacing table
- 22: seat
- 23: drum
- 24: pushing element
- DP: presence data set
- DS: position data set
- P: commanded position
- SW: motion control software
- t1: time instant
- t2: time instant
- tn: time instant

## Claims

1. A computer-implemented method for simulating the motion of at least part (5) of an automatic machine (1) for manufacturing or packaging consumer articles (3); the method comprises the steps of:
- defining a three-dimensional model (13), in a computer-aided design environment (14), of the part (5) of automatic machine (1) whose motion is to be simulated; wherein the part (5) of automatic machine (1) includes one or more movable operating elements (2);
- programming a software (SW) for motion control of the one or more movable operating elements (2) of the part (5) of the automatic machine (1); in which the software (SW) for motion control is designed to command, in use, the actual motion of the part (5) of the machine (1);
the method being **characterised in that** it repeats cyclically, in successive instants of time, the steps of:
- extracting, during the execution of the software (SW) for motion control, a data set (DS) about the commanded position (P), at a given instant (t1, t2, ..., tn) of time, to the one or more movable operating elements (2) or elements connected to them;
- communicating the data set (DS) about commanded position (P) in the aided design environment (14); and
- simulating the movement of the one or more movable operating elements (2) in the aided design environment (14) by changing the position of the one or more movable operating elements (2) according to the data set (DS) about commanded position (P).

2. The method according to claim 1, wherein the communication between the aided design environment (14) and the running software (SW) for motion control occurs in real time.

3. The method according to claim 1 or 2, wherein, in the aided design environment (14), each movable operating element (2) is connected in a constrained manner to at least one shaft (20) configured to be operated by the software (SW) for motion control; wherein the data set (DS) comprises the commanded position (P), preferably absolute, preferably in degrees, of the respective shaft (20) for each movable operating element (2).

4. The method according to claim 3, wherein the respective shaft (20) is a follower/output element (20) of an actuator (6).

5. The method according to any one of the preceding claims, wherein the steps of extracting, communicating and simulating are cyclically performed at consecutive instants of time spaced 10 or more milliseconds apart, in particular 20 or more milliseconds apart.

6. The method according to claim 5, and comprising the step of interpolating, via the aided design environment (14), successive positions of the same movable operating element (2).

7. The method according to any one of the preceding claims, and comprising the further step of verifying, visually or instrumentally by means of the aided design environment (14), in particular interrupting the step of simulating by pausing the running of the software (SW) for motion control, the distances between movable operating elements (2) and/or with fixed parts of the automatic machine (1); and/or the phasing of the movements of the movable operating elements (2) in the case of a shared workspace; and/or the zeros of the movable operating elements (2) from which to start in the calculation of the position.

8. The method according to any one f the preceding claims, wherein the set (DS) of data is extracted during the execution of the program for motion control on a real machine (1), so as to analyse its remote behaviour by means of the simulating step.

9. The method according to any one of the preceding claims, and comprising the further steps of:
- extracting, during the execution of the software (SW) for motion control, a data set (DP) on the presence or absence of one or more articles (3), at respective given instant positions (t1, t2, ..., tn) of time;
- communicate the data set (DP) of presence or absence to the aided design environment (14); and
- visually simulate the presence or absence of the one or more articles (3) at their respective given positions according to the data set (DP) of presence or absence.

10. An apparatus (7) for simulating the motion of at least part (5) of an automatic machine (1) for manufacturing or packaging consumer articles (3); the apparatus (7) comprises:
- a first processor (12) configured to define a three-dimensional model (13), in a computer-aided design environment (14), of the part (5) of automatic machine (1) whose motion is to be simulated; wherein the part (5) of automatic machine (1) includes one or more movable operating elements (2);
- a second processor (15) configured to execute a software (SW) for motion control of the one or more movable operating elements (2) of the automatic machine part (5); wherein the software (SW) for motion control is configured to control, in use, the actual motion of the machine part (5);
- a control unit (16) configured to connect the first processor (12) to the second processor (15) and exchange a data set (DS) about a commanded position (P), at a given instant (t1, t2, ..., tn) of time, to the one or more movable operating elements (2) or elements connected to them, from the software (SW) for motion control to the aided design environment (14);
wherein the control unit (16) is configured to simulate the motion of the one or more movable operating elements (2) in the aided design environment (14) by changing the position of the one or more movable operating elements (2) according to the data set (DS) of commanded position (P).

11. The apparatus (7) according to claim 10, wherein the first processor (12), the second processor (15) and the control unit (16) are comprised by the same computer.
